# EUROPÄISCHE PATENTSCHRIFT

(11) **EP 3 921 133 B1**
(45) Veröffentlichungstag und Bekanntmachung des Hinweises auf die Patenterteilung: **06.07.2022**
(21) Anmeldenummer: 20705647.4
(22) Anmeldetag: 11.02.2020
(51) Int. Cl.: B29C 48/90, B29C 48/09, B29C 48/12, B22F 3/105, B33Y 10/00, B33Y 30/00, B33Y 50/00, B33Y 80/00

(54) **LAMELLENBLOCK MIT KONTINUIERLICH VARIIERTER LAMELLENBREITE**
LAMELLA BLOCK WITH A CONTINUOUSLY VARYING LAMELLA WIDTH
BLOC DE LAMELLES DOTÉ D'UNE ÉPAISSEUR DE LAMELLE VARIANT EN CONTINU

(30) Priorität: 21.03.2019 DE 102019002008
(43) Veröffentlichungstag der Anmeldung: 15.12.2021
(73) Patentinhaber: KraussMaffei Technologies GmbH, 80997 München (DE)
(72) Erfinder: ESSWEIN, Michael, 85375 Neufahrn (DE); BREUNING, Walter, 85232 Bergkirchen (DE); BUHL, Stefan, 85221 Dachau (DE)
(74) Vertreter: Krauss, Philipp
(86) Internationale Anmeldenummer: PCT/EP2020/053502
(87) Internationale Veröffentlichungsnummer: WO 2020/187488

(56) Entgegenhaltungen:
- DE-A1-102009 016 100
- DE-B3- 10 315 125
- DE-B3-102005 002 820
- US-A1- 2003 211 657

## Beschreibung

Die Erfindung betrifft einen Lamellenblock für eine Kalibriereinrichtung zur Kalibrierung eines extrudierten Profils. Die Erfindung betrifft ferner ein Verfahren zur Herstellung eines derartigen Lamellenblocks, ein System zur additiven Fertigung eines derartigen Lamellenblocks und ein entsprechendes Computerprogramm und Datensatz.

Kalibriereinrichtungen werden zur Kalibrierung von extrudierten Endlosprofilen, wie beispielsweise Rohrprofilen, eingesetzt. Bei der Herstellung derartiger Profile wird zunächst in einem Extruder eine zur Herstellung des Profils gewünschte Kunststoffschmelze erzeugt. Die erzeugte Kunststoffschmelze wird dann durch eine Austrittsdüse des Extruders gepresst, welche die Form des Profils vorgibt. Das aus der Austrittsdüse des Extruders austretende Profil durchläuft anschließend eine Kalibriereinrichtung, welche das noch erhitzte Profil dimensionsgenau nachformt.

Eine derartige Kalibriereinrichtung zur Dimensionierung extrudierter Profile ist aus der DE 198 43 340 C2 bekannt. Dort wird eine variabel einstellbare Kalibriereinrichtung gelehrt, die zur Kalibrierung von extrudierten Kunststoffrohren mit unterschiedlichem Rohrdurchmesser ausgebildet ist. Die Kalibriereinrichtung umfasst ein Gehäuse und eine Vielzahl von im Gehäuse kreisförmig angeordneten Lamellenblöcken, die zusammen einen Kalibrierkorb mit kreisförmiger Kalibrieröffnung bilden, durch welche die zu kalibrierenden Rohre geführt werden (vgl. insbesondere die Figuren 1 und 2 der DE 198 43 340 C2). Ferner ist jeder Lamellenblock mit einer Betätigungsvorrichtung gekoppelt, die zur individuellen radialen Verschiebung des jeweiligen Lamellenblocks vorgesehen ist. Auf diese Weise kann der Wirkquerschnitt der durch die Vielzahl der Lamellenblöcke gebildeten kreisförmigen Kalibrieröffnung je nach Bedarf entsprechend eingestellt werden.

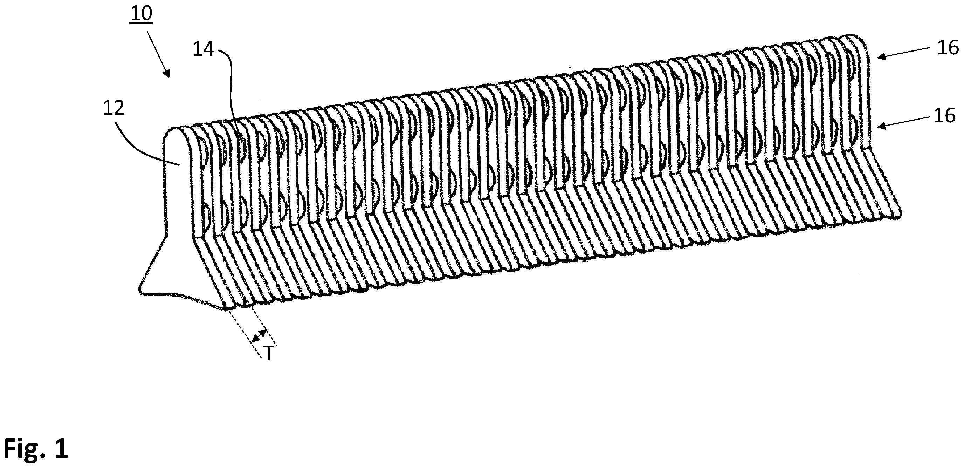

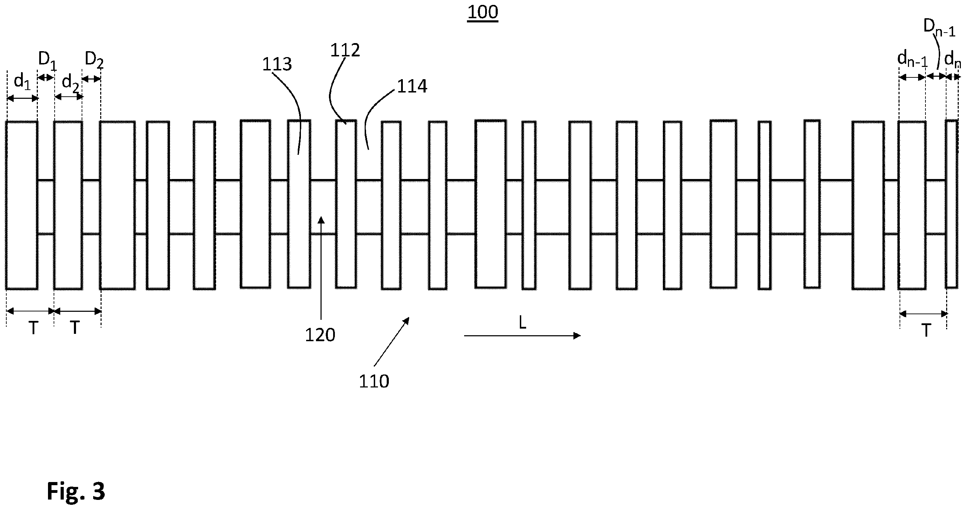

Die in der DE 198 43 340 C2 beschriebenen Lamellenblöcke bestehen jeweils aus einer Vielzahl von Lamellen, die auf zwei voneinander beabstandet angeordneten Trägerstangen aufgefädelt sind. Zur Einhaltung eines gewünschten Abstands zwischen benachbarten Lamellen kommen Abstandshülsen zum Einsatz (vgl. auch Figur 3 der DE 198 43 340 C2). Ein Beispiel eines gefädelten Lamellenblocks ist ferner in der Figur 1 gezeigt. Der in Figur 1 dargestellte Lamellenblock 10 umfasst eine Vielzahl von Lamellen 12 und Abstandshülsen 14, die abwechselnd entlang zweier Trägerstangen 16 aufgefädelt sind. Derartige gefädelte Lamellenblöcke sind aufwendig in der Fertigung und damit kostenintensiv.

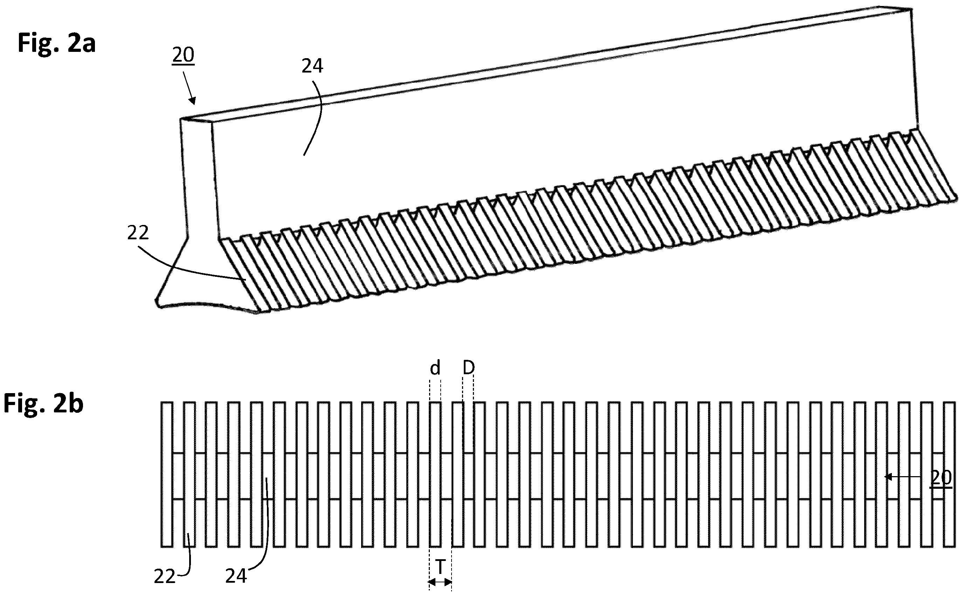

Abweichend von den oben beschriebenen gefädelten Lamellenblöcken sind ferner Lamellenblöcke mit geschlossenen Trägerstrukturen (bzw. Rückenstrukturen) bekannt. Die Figuren 2a und 2b zeigen ein Beispiel eines derartigen Lamellenblocks. Der Lamellenblock 20 umfasst eine Vielzahl von Lamellen 22, die von einer blockförmig ausgebildeten Rückenstruktur 24 getragen werden (vgl. 3D-Ansicht in Figur 2a). Die blockförmige Rückenstruktur 24 ist hierbei in der Form eines massiven Körpers (z.B. stabförmiger Körper) realisiert. Weitere Beispiele von Lamellenblöcken mit geschlossener Rückenstruktur sind aus der WO 2004/103684 A1 bekannt. Derartige Lamellenblöcke können einstückig ausgebildet sein. Sie können durch geeignete Bearbeitungsverfahren (wie beispielsweise Fräsen, Zuschneiden) aus einem Materialblock kostengünstig hergestellt werden. Denkbar ist aber auch der Einsatz eines Gussverfahrens, um den Lamellenblock 20 herzustellen.

Den in den Figuren 1, 2a und 2b dargestellten Lamellenblöcken 10, 20 ist gemeinsam, dass die Lamellen 12, 22 sowie die Abstandsbereiche zwischen den Lamellen 12, 22 (auch Nuten genannt) jeweils eine vorgegebene konstante Breite aufweisen. Somit weisen die durch die Lamellen 12, 22 und Nuten erzeugten Lamellenstrukturen der Lamellenblöcke 10, 20 jeweils eine in Längsrichtung der Lamellenblöcke 10, 20 konstante Teilung T (Periodizität) auf (siehe Figuren 1 und 2b). Mit Teilung T ist hierbei die kleinste Länge innerhalb der Lamellenstruktur gemeint, nach der sich die Anordnung der Lamellen wiederholt. Die Teilung *T* hängt von der Breite d der Lamellen und der Breite D der Nuten innerhalb der Lamellenstruktur ab und entspricht der Summe der Breiten einer Lamelle und ihrer angrenzenden Nut (also *T = d+D).*

Bei den hier beschriebenen Lamellenblöcken mit konstanter Teilung wird häufig ein Rattern der zu kalibrierenden Profile beobachtet, wenn diese durch den Kalibrierkorb geschoben werden. Ursache des Ratterns ist die beim Kalibrieren des Profils entstehende Beulenstruktur an der Profiloberfläche. Denn der beim Kalibrierprozess noch plastisch verformbar vorliegende Kunststoff des zu kalibrierenden Profils wird leicht in die Nuten der Lamellenstruktur gedrückt. Dadurch bilden sich an der Oberfläche des zu kalibrierenden Profils Beulfelder (kurz Beulen) aus, deren Abmessungen den Abmessungen der Nuten entsprechen. An der Oberfläche des zu kalibrierenden Profils entsteht so eine mit der Teilung T der Lamellenstruktur sich wiederholende Beulenstruktur. Beim Vorschub des zu kalibrierenden Profils durch den Kalibrierkorb der Kalibriereinrichtung "rasten" bereits erzeugte Beulen an der Profiloberfläche in nachfolgende Nuten der Lamellenblöcke ein. Das sich wiederholende Einrasten der Beulen in die Nuten führt zu dem unerwünschten Rattern des zu kalibrierenden Profils im Kalibrierkorb. Andererseits wird durch die sich wiederholende Einprägung der Lamellenstruktur an der Profiloberfläche die Beulenstruktur an der Profiloberfläche verstärkt.

DE 10 2009 016 100 A1 betrifft eine Kalibriervorrichtung für eine Anlage zur Extrusion von Kunststoffrohren umfassend Kalibrierwerkzeuge, die bei der Kalibrierung an der Außenwandung des Rohres anliegen, wobei eine Mehrzahl von segmentförmigen Kalibrierwerkzeugen über den Umfang des zu kalibrierenden Rohres verteilt jeweils mit Abstand ihrer Mittelpunkte zueinander angeordnet sind und jeweils eine ringförmige Anordnung bilden und wobei in Produktionsrichtung des Rohres gesehen eine Mehrzahl solcher ringförmiger Anordnungen vorgesehen sind, wobei die einzelnen Werkzeuge zweier in Längsrichtung aufeinanderfolgender ringförmiger Anordnungen jeweils in Umfangsrichtung zueinander versetzt stehen und die segmentförmigen Werkzeuge des in Längsrichtung unmittelbar folgenden Rings jeweils in die Lücke zwischen den Werkzeugen eines Rings und des übernächsten Rings eingreifen, so dass sich eine verzahnte Anordnung ergibt.

Erfindungsgemäß ist vorgesehen, dass die einzelnen segmentförmigen sich in Umfangsrichtung erstreckenden Kalibrierwerkzeuge als Hohlkörper ausgebildet sind und im Bereich ihrer am Rohrumfang anliegenden Gleitflächen Schlitze aufweisen, welche mit einem Hohlraum in dem Hohlkörper in Verbindung stehen. Dadurch kann man Wasser oder Unterdruck über die Schlitze auf die Rohroberfläche geben.

DE 10 2005 002 820 B3 betrifft eine stufenlos einstellbare Kalibrierhülse für extrudierte Kunststoffrohre mit einem Einlaufkopf und zwei Bänderlagen, die sich nach Art eines Scherengitters kreuzen und an den Kreuzungspunkten gelenkig miteinander verbunden sind. Dabei sind der Einlaufkopf und die Bänderlagen auf den Rohrdurchmesser einstellbar und der Einlaufkopf weist in einer Radialebene angeordnete, auf den Umfang des zu kalibrierenden Kunststoffrohres verteilte, radial verstellbare und sich überlappende Segmente auf, die in ihren Überlappungsbereichen Schlitze aufweisen und verzahnend ineinandergreifen. Die Stirnseiten der Segmente sind zur Anlage an das zu kalibrierende Kunststoffrohr ausgebildet und die Bänderlagen sind bündig mit den Stirnseiten gelenkig an den Segmenten befestigt. Mit einer derartigen Kalibrierhülse soll eine effektive Abdichtung des Vakuumtanks gegenüber der Umgebung erreicht sowie Stauchungen des einlaufenden, extrudierten Kunststoffrohres vermieden werden.

DE 103 15 125 B3 betrifft eine Kalibriereinrichtung zur Kalibrierung von extrudierten Endlosprofilen, insbesondere Rohren, umfassend eine Vielzahl von aus einzelnen Segmenten bestehenden hintereinander angeordneten Segmentkränzen, deren Innenoberfläche gemeinsam eine Kalibrieröffnung bilden, wobei in Axialrichtung hintereinander liegende Segmente zu einem Segmentblock zusammengefasst sind, die einzelnen Segmente eines jedes Segmentblockes auf einer Trägerstruktur angeordnet sind, die Segmentblöcke im Wesentlichen kreisförmig derart in einem Gehäuse aufgenommen sind, dass sich axial benachbarte Segmente in jeder Stellung in Umfangsrichtung teilweise überlappen, und jede Trägerstruktur mit zumindest einer Halterungs- und Betätigungsvorrichtung verbunden ist, mit der die einzelnen einer jeweiligen Trägerstruktur (zugeordneten Segmentblöcke in dem Gehäuse gehalten sind und eine Verstellung jedes einzelnen Segmentblockes in Radialrichtung vornehmbar ist. Zum leichteren Einbau und zur leichteren Montage wird dabei vorgeschlagen, dass jede Halterungs- und Betätigungsvorrichtung zweigeteilt aufgebaut ist, wobei ein erster Teil mit der Trägerstruktur verbunden ist, ein zweiter Teil in dem Gehäuse aufgenommen ist und beide Teile trennbar miteinander verbunden sind.

US 2003 / 211 657 A1 beschreibt einen stereolithographisch gefertigten Kühlkörper. Der Kühlkörper weist ein Wärmeübertragungselement auf, das so konfiguriert ist, dass es in der Nähe einer Halbleitervorrichtung angeordnet ist, um während seiner Verwendung Wärme von der Halbleitervorrichtung zu absorbieren. Der Kühlkörper hat auch ein Wärmeableitungselement, das konfiguriert ist, um Wärme abzugeben, wenn Luft an einer Oberfläche davon vorbeiströmt. Wenn stereolithographische Verfahren verwendet werden, um das Wärmeableitungselement des Kühlkörpers herzustellen, kann das Wärmeableitungselement nichtlineare oder gewundene Durchgänge aufweisen, durch die Luft strömen kann. Da mindestens ein Teil des Kühlkörpers stereolithographisch hergestellt ist, kann dieser Teil eine Reihe übereinanderliegender, zusammenhängender, aneinander haftender Schichten aus wärmeleitendem Material aufweisen. Die Schichten können durch konsolidierte ausgewählte Bereiche einer Schicht aus nicht konsolidiertem teilchenförmigem oder pulverförmigem Material oder durch Definieren einer Objektschicht aus einer Materialschicht hergestellt werden. Das stereolithographische Verfahren kann die Verwendung eines Bildverarbeitungssystems umfassen, das mindestens eine Kamera umfasst, die betriebsbereit mit einem Computer verbunden ist, der eine stereolithographische Materialanwendung steuert, so dass das System die Position und Ausrichtung einer Halbleitervorrichtung oder eines anderen Substrats erkennen kann, auf dem sich der Kühlkörper befindet hergestellt werden.

Aufgabe der vorliegenden Erfindung ist es, Lamellenblöcke für eine Kalibriereinrichtung bereitzustellen, welche die im Zusammenhang mit dem Stand der Technik aufgezeigten Probleme weiter reduzieren bzw. beseitigen. Insbesondere ist es Aufgabe der vorliegenden Erfindung, die Oberflächenstruktur des zu kalibrierenden Profils zu verbessern. Ferner soll das in Zusammenhang mit bekannten Kalibrierblöcken beobachtete Rattern des zu kalibrierenden Profils zumindest reduziert bzw. ganz vermieden werden.

Zur Lösung der oben genannten Aufgabe wird gemäß einem ersten Aspekt ein Lamellenblock für eine Kalibriereinrichtung zur Kalibrierung eines extrudierten Profils bereitgestellt. Der Lamellenblock umfasst eine Lamellenstruktur, welche eine Vielzahl von Lamellen aufweist, die durch Nuten voneinander beabstandet und in Längsrichtung des Lamellenblocks angeordnet sind, wobei die Lamellen der Lamellenstruktur in Längsrichtung des Lamellenblocks eine variable Abmessung aufweisen.

Das extrudierte Profil kann ein Kunststoffprofil sein. Das extrudierte Kunststoffprofil kann ein Endlosprofil, wie beispielsweise ein Rohrprofil sein.

Mit Abmessung in Längsrichtung des Lamellenblocks ist die Breite der Lamellen gemeint. Folglich ist mit variabler Abmessung eine variable (also sich ändernde) Lamellenbreite in Längsrichtung des Lamellenblocks gemeint.

Die Lamellenstruktur weist eine in Längsrichtung des Lamellenblocks konstante (also gleichbleibende) Teilung auf. Die Teilung der Lamellenstruktur in Längsrichtung des Lamellenblocks (also entlang des Lamellenblocks) hängt von der Breite der Lamellen und der Breite der Nuten ab. Die Teilung (Teilungslänge) der Lamellenstruktur setzt sich aus der Breite einer Lamelle und der Breite ihrer angrenzenden Nut zusammen. Bleibt die Teilung der Lamellenstruktur trotz variabler Breite der Lamellen in Längsrichtung konstant, so variiert die Breite der Nuten zwischen den Lamellen entsprechend. Mit Nut ist der Abstand zweier benachbarter Lamellen innerhalb der Lamellenstruktur gemeint, wie eingangs beschrieben.

Die Abmessung der Lamellen in Längsrichtung des Lamellenblocks kann kontinuierlich variieren (sich ändern). Mit kontinuierlich variieren kann gemeint sein, dass aufeinanderfolgende Lamellen der Lamellenstruktur zueinander jeweils verschieden Lamellenbreiten aufweisen. Die Lamellenstruktur weist somit keine Bereiche auf, in denen aufeinanderfolgende Lamellen dieselbe Breite aufweisen. Vielmehr kann die Breite der Lamellen innerhalb der Lamellenstruktur von Lamelle zu Lamelle variieren.

Gemäß einer Variante kann die Abmessung der Lamellen in Längsrichtung des Lamellenblocks beliebig variieren. Das bedeutet, dass die Variation (Änderung) der Lamellenbreiten entlang der Lamellenstruktur keinem vorgegebenen Muster (funktionalen Zusammenhang) folgt. Vielmehr ist die Variation der Lamellenbreiten entlang der Lamellenstruktur zufällig.

Alternativ zu der oben beschriebenen zufälligen Variation der Lamellenbreiten kann die Abmessung der Lamellen (Lamellenbreite) in Längsrichtung des Lamellenblocks gemäß einer vorgegeben Funktion variieren. Die die Variation (Änderung) der Lamellenbreite beschreibende Funktion kann eine stetige Funktion sein. Denkbar ist beispielsweise eine die Änderung der Lamellenbreite beschreibende Funktion, bei der die Lamellenbreite entlang der Lamellenstruktur von einem Lamellenstrukturende zum gegenüberliegenden Lamellenstrukturende kontinuierlich zunimmt oder kontinuierlich abnimmt. Denkbar ist aber auch eine Variation (Änderung) der Lamellenbreite gemäß einer Funktion, bei der die Lamellenbreite ausgehend von einem Lamellenstrukturende zunächst kontinuierlich zunimmt/abnimmt, um anschließend bis zum Erreichen des gegenüberliegenden Lamellenstrukturendes wieder kontinuierlich abzunehmen/zuzunehmen. Unabhängig von der konkreten Implementierung sollte die die Variation der Lamellenbreite beschreibende Funktion derart gewählt sein, dass sie entlang der Lamellenstruktur keine Periodizität aufweist. Auf diese Weise wird die Bildung einer periodischen Überstruktur in der Lamellenstruktur verhindert.

Der Lamellenblock kann ferner eine Trägerstruktur aufweisen, an dem die Lamellenstruktur angeordnet ist. Die Trägerstruktur kann eine blockförmige Rückenstruktur umfassen, die balkenförmig ausgebildet ist. Die blockförmige Rückenstruktur kann ferner mit Durchbrechungen versehen sein, um das Gewicht des Lamellenblocks zu reduzieren.

Die Trägerstruktur kann mit den Lamellen bzw. der Lamellenstruktur einstückig ausgebildet sein. Zur Erreichung einer einstückigen Ausbildung kann der Lamellenblock mittels 3D-Druck hergestellt werden. Denkbar ist jedoch auch, dass der Lamellenblock beispielsweise durch Fräsen, Bohren und/oder Schneiden aus einem einzigen Werkstück gefertigt wird. Alternativ kann die Lamellenstruktur bzw. die Lamellen sowie die Trägerstruktur jeweils separat gefertigt sein. Die Lamellenstruktur (bzw. die Lamellen) kann (können) dann mit der Trägerstruktur entsprechend verbunden sein.

Die Trägerstruktur und die Lamellen können aus demselben Material oder aus verschiedenen Materialien gefertigt sein. Gemäß einer Variante kann das Material, aus dem die Trägerstruktur und/oder die Lamellen gefertigt sind, aus einem metallischen Werkstoff gefertigt sein. Denkbar ist jedoch auch die Verwendung eines polymeren Werkstoffs (mit Additiven).

Gemäß einem weiteren Aspekt der Erfindung wird eine Kalibriereinrichtung zur Kalibrierung von extrudierten Kunststoffprofilen bereitgestellt, wobei die Kalibriereinrichtung eine Vielzahl der erfindungsgemäßen Lamellenblöcke aufweist, die zur Bildung einer Kalibrieröffnung zueinander angeordnet sind. Die Anordnung der Lamellenblöcke kann dabei derart sein, dass diese eine kreisrunde Kalibrieröffnung bilden.

Die Kalibriereinrichtung kann ferner eine Vielzahl von Betätigungseinrichtungen umfassen, wobei jede Betätigungseinrichtung jeweils mit einem Lamellenblock gekoppelt ist. Durch die Betätigungseinrichtung kann jeder Lamellenblock radial zur Kalibrieröffnung individuell betätigt werden. Dadurch kann der Wirkquerschnitt der Kalibrieröffnung nach Bedarf an den Querschnitt (Durchmesser) des zu kalibrierenden Profils angepasst werden.

Ferner kann die Kalibriereinrichtung ein Gehäuse aufweisen, das zur Aufnahme und Lagerung der Betätigungseinrichtungen und der mit den Betätigungseinrichtungen gekoppelten Lamellenblöcke vorgesehen ist.

Gemäß einem weiteren Aspekt der Erfindung wird ein Verfahren zum Herstellen eines Lamellenblocks wie oben beschrieben bereitgestellt. Das Verfahren zum Herstellen des Lamellenblocks umfasst wenigstens den Schritt des Herstellens des Lamellenblocks mittels 3D-Druck oder mittels eines additiven Fertigungsverfahrens. Die Herstellung des Lamellenblocks mittels 3D-Druckverfahren oder additiven Fertigungsverfahren kann hierbei ein schichtweises Lasersintern/Laserschmelzen von Materialschichten umfassen, wobei die Materialschichten entsprechend der zu erzeugenden Form des Lamellenblocks nacheinander (sequentiell) aufgetragen werden.

Das Verfahren kann ferner den Schritt des Berechnens einer Lamellenblockgeometrie (CAD-Daten) umfassen und, optional, das Umwandeln der 3D-Geometriedaten in entsprechende Steuerbefehle für den 3D-Druck oder die additive Fertigung.

Gemäß einem weiteren Aspekt wird ein Verfahren zum Herstellen eines Lamellenblocks bereitgestellt, das die Schritte umfasst: Erstellen eines Datensatzes, welcher den wie oben beschrieben Lamellenblock abbildet; und Speichern des Datensatzes auf einer Speichervorrichtung oder einem Server. Das Verfahren kann ferner umfassen: Eingeben des Datensatzes in eine Verarbeitungsvorrichtung oder einen Computer, welche/r eine Vorrichtung zur additiven Fertigung derart ansteuert, dass diese den im Datensatz abgebildeten Lamellenblock fertigt.

Gemäß einem weiteren Aspekt wird ein System zur additiven Fertigung eines Lamellenblocks bereitgestellt, mit einer Datensatzerzeugungsvorrichtung zum Erzeugen eines Datensatzes, welcher den wie oben beschrieben Lamellenblock abbildet, einer Speichervorrichtung zum Speichern des Datensatzes und einer Verarbeitungsvorrichtung zum Empfangen des Datensatzes und zum derartigen Ansteuern einer Vorrichtung zur additiven Fertigung, dass diese den im Datensatz abgebildeten Lamellenblock fertigt. Die Speichervorrichtung kann ein USB-Stick, eine CD-ROM, eine DVD, eine Speicherkarte oder eine Festplatte sein. Die Verarbeitungsvorrichtung kann ein Computer, ein Server oder ein Prozessor sein.

Gemäß einem weiteren Aspekt wird ein Computerprogramm bzw. Computerprogrammprodukt bereitgestellt, umfassend Datensätze, die bei dem Einlesen der Datensätze durch eine Verarbeitungsvorrichtung oder einen Computer diese/n veranlasst, eine Vorrichtung zur additiven Fertigung derart anzusteuern, dass die Vorrichtung zur additiven Fertigung den wie oben beschrieben Lamellenblock fertigt.

Gemäß einem weiteren Aspekt wird ein computerlesbarer Datenträger bereitgestellt, auf dem das vorstehend beschriebene Computerprogramm gespeichert ist. Der computerlesbare Datenträger kann ein USB-Stick, eine CD-ROM, eine DVD, eine Speicherkarte oder eine Festplatte sein.

Gemäß einem weiteren Aspekt wird ein Datensatz bereitgestellt, welcher den wie oben beschrieben Lamellenblock abbildet. Der Datensatz kann auf einem computerlesebaren Datenträger gespeichert sein.

Weitere Vorteile, Einzelheiten und Aspekte der vorliegenden Erfindung werden anhand der nachfolgenden Zeichnungen diskutiert. Es zeigen:
- Fig. 1: eine 3D-Ansicht eines Lamellenblocks für eine Kalibriereinrichtung gemäß dem Stand der Technik;
- Fign. 2a/2b: Ansichten eines weiteren Lamellenblocks für eine Kalibriereinrichtung gemäß dem Stand der Technik;
- Fig. 3: eine Ansicht eines Lamellenblocks gemäß der vorliegenden Erfindung;
- Fig. 4: eine Ansicht eines weiteren Lamellenblocks gemäß der vorliegenden Erfindung;
- Fig. 5: ein Blockdiagramm eines Verfahrens zur Herstellung der in den Figuren 3 und 4 beschriebenen Lamellenblöcke; und
- Fig. 6: eine Kalibriereinrichtung gemäß der vorliegenden Erfindung.

Die Figuren 1, 2a und 2b wurden bereits im Zusammenhang mit dem Stand der Technik eingangs diskutiert. Es sei auf die dortige Beschreibung verwiesen.

Im Zusammenhang mit der Figur 3 wird nun ein erfindungsgemäßer Lamellenblock 100 für eine Kalibriereinrichtung weiter beschrieben. Figur 3 zeigt eine Ansicht auf eine Innenseite des Lamellenblocks 100. Mit Innenseite wird jene Seite des Lamellenblocks 100 bezeichnet, die einem zu kalibrierenden Profil zugewandt ist.

Der Lamellenblock 100 umfasst eine Lamellenstruktur 110, die eine Vielzahl von Lamellen 112 und Nuten 114 umfasst, welche benachbarte Lamellen 112 voneinander trennen. Mit Nuten 114 werden folglich die Freiräume (Abstände) zwischen aufeinanderfolgenden Lamellen 112 bezeichnet. In der in Figur 3 gezeigten Ansicht ist jede einzelne Lamelle 112 der Lamellenstruktur 110 in Form eines Querbalkens dargestellt. Der Lamellenblock 100 umfasst ferner eine Trägerstruktur 120 zur Aufnahme (Lagerung) der Lamellen 112 (bzw. Lamellenstruktur 110). Die Trägerstruktur 120, entlang der die Lamellen 112 angeordnet sind, ist in Figur 3 als Längsbalken (horizontaler Balken) angedeutet.

Die Trägerstruktur 120 kann eine blockförmig ausgebildete Rückenstruktur aufweisen. Die Rückenstruktur kann durch einen balkenförmigen Körper realisiert sein, entlang dem die Lamellen 112 angeordnet sind. Insbesondere kann die balkenförmige Rückenstruktur Durchbrechungen zur Reduzierung des Gewichts aufweisen. Somit kann die Trägerstruktur 120 genauso ausgebildet sein, wie die Trägerstruktur des in Zusammenhang mit den Figuren 2a und 2b beschriebenen Lamellenblocks 20. Es sei auf die entsprechende Beschreibung der Figuren 2a und 2b verwiesen. Alternativ kann die Trägerstruktur 120 wenigstens eine Trägerstange aufweisen, an der die Lamellen 112 aufgefädelt werden, so wie in Zusammenhang mit dem Lamellenblock in der Figur 1 eingangs beschrieben. Der Abstand (Nuten) zwischen aufeinanderfolgenden Lamellen 112 wird im aufgefädelten Lamellenblock mittels Abstandshülsen geeigneter Länge realisiert.

Die Lamellen 112 der Lamellenstruktur 110 weisen jeweils ein senkrecht zur Längsrichtung L des Lamellenblocks 100 vorgegebenes Querschnittsprofil auf (in der Ansicht in Figur 3 nicht zu sehen). Das Querschnittsprofil einer jeden Lamelle 112 kann hierbei dem Querschnittsprofil der in den Figuren 1 oder 2a gezeigten Lamellen entsprechen (also ein annähernd dreieckförmiges Querschnittsprofil realisieren). Jede Lamelle 112 weist ferner eine dem zu kalibrierenden Profil zugewandte Lamellenfläche 113 auf. Die Lamellenflächen 113 der Lamellen 112 bilden eine Kontaktfläche, mit der das zu kalibrierende Profil in Kontakt kommt. Die dem zu kalibrierenden Profil zugewandte Lamellenfläche 113 kann flach ausgebildet sein oder eine gekrümmte Oberfläche aufweisen.

Die Lamellen 112 der Lamellenstruktur 110 sind derart ausgebildet, dass die Lamellen 112 in Längsrichtung L des Lamellenblocks 100 variable Breiten d aufweisen. Gleichzeitig weist die Lamellenstruktur in Längsrichtung L des Lamellenblocks 100 eine vorgegebene, konstante Teilung *T* auf. Mit Teilung *T* (bzw. Teilungslänge) ist hierbei die Länge der die Lamellenstruktur 110 aufbauenden Grundeinheit gemeint, welche aus einer Lamelle 112 und ihrer angrenzenden Nut 114 besteht. Die Teilung T der Lamellenstruktur setzt sich somit aus der Breite d einer Lamelle 112 und der Breite D ihrer angrenzenden Nut 114 zusammen, also *T = d+D.* Da die Teilung *T* entlang der Lamellenstruktur 110 konstant bleibt, variiert die Breite D der Nuten 114 entsprechend der sich ändernden Lamellenbreiten d. Mit anderen Worten umfasst die Lamellenstruktur 110 Lamellen 112 mit variabler Lamellenbreite d und variabler Nutbreite D derart, dass die Teilung T entlang der Lamellenstruktur 110 einen fest vorgegeben, konstant Wert aufweist.

Die in der Figur 3 gezeigte Lamellenstruktur 110 weist eine Anzahl von *n* in Längsrichtung L des Lamellenblocks 100 angeordneten Lamellen 112 auf (n ist eine beliebige natürliche Zahl). Jede der n Lamellen 112 weist eine vorgegeben Lamellenbreite *dᵢ* (i = 1, ... n, wobei n eine natürliche Zahl ist und die Anzahl der Lamellen 112 in der Lamellenstruktur 110 wiedergibt) auf, wobei die Lamellenbreiten *d₁, d₂,* ... *dₙ* in Längsrichtung L des Lamellenblocks 100 kontinuierlich variieren. Mit kontinuierlicher Variation der Lamellenbreiten *d₁, d₂,* ... *dₙ* ist gemeint, dass jeweils benachbarte Lamellen 112 innerhalb der Lamellenstruktur 110 unterschiedliche Lamellenbreiten *d₁, d₂,* ... *dₙ* aufweisen. Die Lamellenstruktur 110 weist somit keine Bereiche auf, innerhalb der die Breite *d₁, d₂,* ... *dₙ* benachbarter Lamellen 112 konstant ist.

Wie ferner aus der Figur 3 hervorgeht ist die Variation der Lamellenbreiten *d₁, d₂,* ... *dₙ* entlang der Lamellenstruktur 110 beliebig gewählt. Mit anderen Worten folgt die Variation der Lamellenbreiten *d₁, d₂,* ... *dₙ* in Längsrichtung L keinem vorgegeben Muster (funktionalen Zusammenhang). Insbesondere sind die Lamellen 112 mit den variablen Lamellenbreiten innerhalb der Lamellenstruktur 110 derart angeordnet, dass die Lamellenstruktur 110 keine Periodizität aufweist. Vielmehr wechseln sich Lamellen mit größeren und kleineren Breiten ab, wobei die Breiten der einzelnen Lamellen beliebig gewählt sein können.

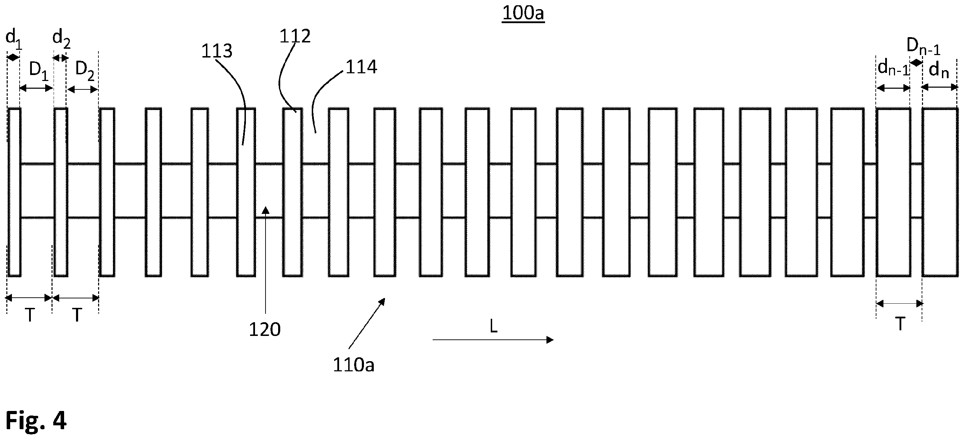

Im Zusammenhang mit der Figur 4 wird ein weiterer Lamellenblock 100a gemäß der vorliegenden Erfindung beschrieben. Der Lamellenblock 100a weist wiederum eine Lamellenstruktur 110a mit einer Vielzahl von zueinander beabstandet angeordneten Lamellen 112 auf. Ferner weist der Lamellenblock 100a einen die Lamellenstruktur 110a tragenden Lamellenträger 120 auf. Lamellenträger 120 und Lamellen 112 können genauso ausgebildet sein, wie im Lamellenblock 100 der Figur 3. Insbesondere weisen die Lamellen 112 der Lamellenstruktur 110 wiederum eine vorgegebene, konstante Teilung T auf. Zur Vereinfachung werden der Lamellenträger 110 und die Lamellen 122 mit denselben Bezugszeichen versehen, wie im Lamellenblock 100 in der Figur 3. Ferner wird auf die entsprechende Beschreibung der Lamellen 112 und des Lamellenträgers 110 in Zusammenhang mit der Figur 3 weiter oben verwiesen.

Der Unterschied zwischen dem Lamellenblock 100 in der Figur 3 und dem Lamellenblock 100a in der Figur 4 besteht in der Ausbildung der Lamellenstruktur 110a. Wie in der Lamellenstruktur 100 in der Figur 3 weist die Lamellenstruktur 110a eine vorgegebene, konstante Teilung T auf. Allerdings variiert die Breite *dᵢ* (mit i = 1, ... *n,* wobei n eine natürliche Zahl ist) der Lamellen 112 in Längsrichtung L des Lamellenblocks 100a kontinuierlich. Somit variieren auch die Breiten *Dᵢ* (mit i = 1, ... n, wobei n eine natürliche Zahl ist) der Nuten 114 in Längsrichtung L. Allerdings ist die kontinuierliche Variation der Lamellenbreiten *dᵢ* (und somit der Nutbreiten *Dᵢ*) in Längsrichtung L nicht beliebig, sondern folgt einer stetigen Funktion.

Gemäß der in der Figur 4 gezeigten Implementierung variieren die Breiten *dᵢ* der Lamellen (und die Breiten *Dᵢ* der Nuten 114) in Längsrichtung L der Lamellenstruktur 110a gemäß einer linear zunehmenden (abnehmenden) Funktion. Ausgehend von einem ersten Ende der Lamellenstruktur 110a (linkes Ende in der Figur 4) nimmt die Breite der Lamellen *d₁, d₂,* ... *dₙ* bis zu einem zweiten Ende der Lamellenstruktur 110a (rechtes Ende in der Figur 4) linear zu. Es versteht sich, dass die hier beschriebene lineare Zunahme der Lamellenbreiten *d₁, d₂,* ... *dₙ* lediglich exemplarisch ist und eine andere funktionelle Variation der Lamellenbreiten *d₁, d₂,* ... *dₙ* genauso denkbar ist. Entscheidend ist nur, dass die Variation der Lamellenbreiten *d₁, d₂,* ... *dₙ* derart ist, dass innerhalb der Lamellenstruktur 110a keine Bereiche konstanter Breite auftreten.

Durch die in Zusammenhang mit den Figuren 3 und 4 beschriebene kontinuierliche Variation der Lamellenbreiten unter Beibehaltung einer konstanten Teilung entlang der Lamellenstruktur 110 wird verhindert, dass die beim Kalibrieren an der Oberfläche des zu kalibrierenden Profils auftretenden Beulen (bedingt durch die Lamellenstruktur selbst) beim Vorschub des zu kalibrierenden Profils durch den Kalibrierkorb immer wieder in nachfolgende Nuten der Lamellenblöcke fallen. Durch die unterschiedliche Position und Größe der Nuten (und somit der Beulen an der Oberfläche des zu kalibrierenden Profils) wird effektiv verhindert, dass Beulen in aufeinanderfolgende Nuten fallen können.

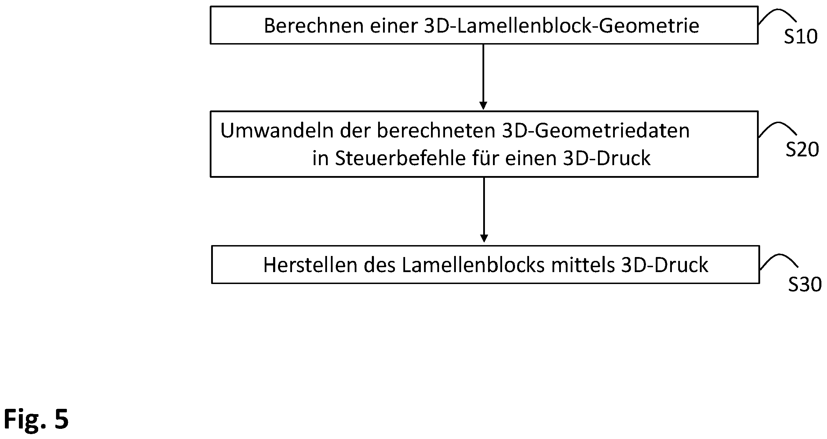

Zur Herstellung der in den Figuren 3 und 4 dargestellten Lamellenblöcke 100, 100a kann ein generatives bzw. additives Fertigungsverfahren zum Einsatz kommen. Ein derartiges Herstellungsverfahren ist in der Figur 5 gezeigt. Hierbei werden in einem ersten Schritt S10 3D-Geometriedaten (CAD-Daten) für den Lamellenblock 100, 100a berechnet. Die 3D-Geometriedaten beschreiben die Geometrie des gesamten Lamellenblocks 100, 100a umfassend die Trägerstruktur 110 und die Lamellenstruktur 110, 110a. In einem darauffolgenden zweiten Schritt S20 werden die berechneten 3D-Geometriedaten in Steuerbefehle für einen 3D-Druck umgewandelt. Basierend auf den erzeugten Steuerbefehlen wird dann der Lamellenblock 100 (in seiner Gesamtheit) mittels eines 3D-Druckverfahrens (z.B. Lasersintern, Laserschmelzen) schichtweise aufgebaut (Schritt S30). Als Werkstoff für den 3D-Druck kann ein metallischer Werkstoff oder ein Polymerwerkstoff zum Einsatz kommen.

Alternativ zu der hier beschriebenen Herstellung mittels 3D-Druck ist auch denkbar, dass die Lamellenblöcke 100, 100a aus einem Werkstück (beispielsweise durch Fräsen, Bohren, Schneiden) oder mittels eines Gussverfahrens hergestellt werden.

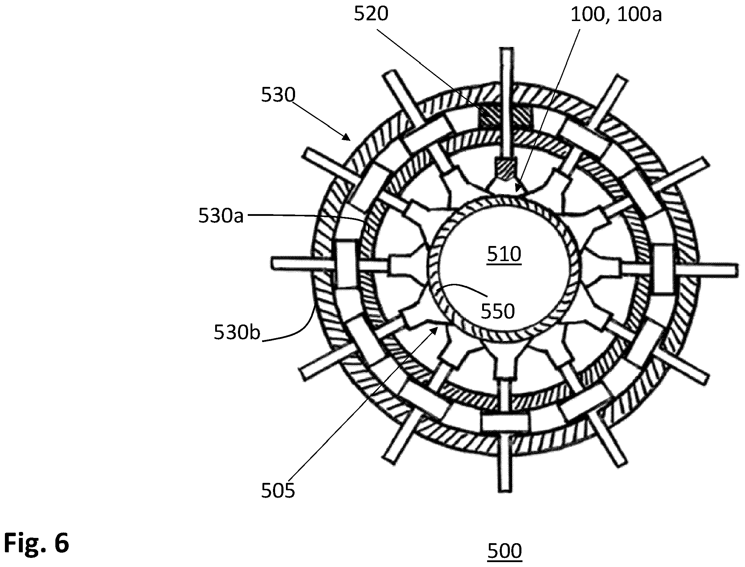

In Zusammenhang mit der Figur 6 wird eine Kalibriereinrichtung 500 zur Kalibrierung eines extrudierten Kunststoffprofils 550 beschrieben. Figur 6 zeigt eine Schnittansicht der Kalibriereinrichtung 500. Das zu kalibrierende Profil 550 ist in der in Figur 6 gezeigten Implementierung ein Rohrprofil.

Die Kalibriereinrichtung 500 umfasst eine Vielzahl der oben beschriebenen erfindungsgemäßen Lamellenblöcke 100, 100a, die in Umfangsrichtung der Kalibriereinrichtung 500 derart zueinander angeordnet sind, dass sie einen Kalibrierkorb 505 mit einer gewünschten Kalibrieröffnung 510 bilden. Wie in der Figur 6 angedeutet, können die benachbarten Lamellenblöcke 100, 100a ineinandergreifend angeordnet sein. Die Lamellen 112 und Nuten 114 benachbarter Lamellenblöcke 100, 100a sind hierfür in ihrer Anordnung und Abmessung (insbesondere in der Nutenbreite und Lamellenbreite) derart aufeinander abgestimmt, dass Lamellen 112 benachbart angeordneter Lamellenblöcke 100, 100a kammartig ineinnader greifen können.

Ferner umfasst die Kalibriereinrichtung 500 eine Vielzahl von Betätigungseinrichtungen 520 (beispielsweise Linearaktoren), wobei jeweils eine Betätigungseinrichtung 520 mit einem Lamellenblock 100, 100a gekoppelt ist. Die Betätigungseinrichtungen 520 sind dazu vorgesehen, die jeweiligen Lamellenblöcke 100, 100a in radialer Richtung (also senkrecht zur Vorschubrichtung des zu kalibrierenden Profils) zu verschieben. Dadurch kann der Wirkquerschnitt der Kalibrieröffnung 510 an das zu kalibrierende Profil 550 entsprechend angepasst werden.

Ferner umfasst die Kalibriereinrichtung 500 ein Gehäuse 530 zur Aufnahme der Betätigungseinrichtungen 520 und der Lamellenblöcke 100, 100a. Das Gehäuse 530 kann zylinderförmig ausgebildet sein. Es kann einen inneren Gehäusezylinder 530a und einem äußeren Gehäusezylinder 530b aufweisen, wobei Komponenten der Betätigungseinrichtung 520 in dem Zwischenraum zwischen dem inneren Gehäusezylinder 530a und dem äußeren Gehäusezylinder 530b angeordnet sein können, ähnlich zu der in der DE 198 43 340 C2 beschriebenen Kalibriereinrichtung.

Durch die hier beschriebenen Lamellenblöcke mit kontinuierlich variierter Lamellenbreite (und Nutbreite) wird verhindert, dass sich an der Profiloberfläche des zu extrudierenden Profils ein periodisches Beulenmuster ausbildet. Da das Beulenmuster unregelmäßig ausgebildet ist, wird verhindert, dass erzeugte Beulen beim Vorschub des extrudierten Profils in nachfolgende Nuten der Lamellenblöcke fallen. Somit wird das eingangs beschriebene Rattern bei einem Kalibriervorgang verhindert. Ferner wird die Oberflächenstruktur des extrudierten Profils verbessert, da durch die sich änderenden Lamellenbreiten (und Nutbreiten) innerhalb der Lamellenstruktur ein wiederholtes Einprägen der Lamellenstruktur an denselben Positionen an der Profiloberfläche verhindert wird.

## Patentansprüche

1. Lamellenblock (100, 100a) für eine Kalibriereinrichtung (500) zur Kalibrierung eines extrudierten Profils (550), wobei der Lamellenblock (100, 100a) eine Lamellenstruktur (110, 110a) umfasst, welche eine Vielzahl von Lamellen (112) aufweist, die durch Nuten (114) voneinander beabstandet und in Längsrichtung des Lamellenblocks (100, 100a) angeordnet sind, **dadurch gekennzeichnet, dass** die Lamellen (112) der Lamellenstruktur (110, 110a) in Längsrichtung des Lamellenblocks (100, 100a) eine variable Abmessung aufweisen, wobei die Lamellenstruktur (110, 110a) in Längsrichtung des Lamellenblocks (100, 100a) eine konstante Teilung aufweist.

2. Lamellenblock (100, 100a) nach Anspruch 1, **dadurch gekennzeichnet, dass** die Abmessung der Lamellen (112) in Längsrichtung kontinuierlich variiert.

3. Lamellenblock (100, 100a) nach einem der vorhergehenden Ansprüche, **dadurch gekennzeichnet, dass** die Abmessung der Lamellen (112) in Längsrichtung des Lamellenblocks (100, 100a) beliebig variiert.

4. Lamellenblock (100, 100a) nach einem der vorhergehenden Ansprüche 1 bis 2, **dadurch gekennzeichnet, dass** die Abmessung der Lamellen (112) in Längsrichtung des Lamellenblocks (100, 100a) gemäß einer vorgegebenen Funktion variiert.

5. Lamellenblock (100, 100a) nach einem der vorhergehenden Ansprüche, **dadurch gekennzeichnet, dass** der Lamellenblock (100, 100a) ferner eine Trägerstruktur (120) aufweist, an dem die Lamellenstruktur (110, 110a) angeordnet ist.

6. Lamellenblock (100, 100a) nach Anspruch 5, wobei die Trägerstruktur (120) und die Lamellen (112) aus demselben Material oder aus verschiedenen Materialien gefertigt sind.

7. Lamellenblock (100, 100a) nach einem der vorhergehenden Ansprüche, wobei der Lamellenblock (100, 100a) einstückig ausgebildet ist.

8. Lamellenblock (100, 100a) nach einem der vorhergehenden Ansprüche, wobei der Lamellenblock (100, 100a) mittels 3D-Druck hergestellt bzw. mittels eines additiven Fertigungsverfahrens ist.

9. Kalibriereinrichtung (500) zur Kalibrierung von extrudierten Profilen (550), umfassend eine Vielzahl von Lamellenblöcken (100, 100a) gemäß einem der Ansprüche 1 bis 8, wobei die Lamellenblöcke (100, 100a) zur Bildung einer Kalibrieröffnung zueinander angeordnet sind.

10. Kalibriereinrichtung nach Anspruch 9, wobei die Kalibriereinrichtung (500) eine Vielzahl von Betätigungseinrichtungen (520) umfasst, wobei jede Betätigungseinrichtung (520) jeweils mit einem Lamellenblock (100, 100a) gekoppelt ist, um einen jeden Lamellenblock (100, 100a) individuell zu betätigen.

11. Verfahren zum Herstellen eines Lamellenblocks (100, 100a) gemäß einem der Ansprüche 1 bis 8, umfassend den Schritt des Herstellens des Lamellenblocks (100, 100a) mittels 3D-Druck bzw. mittels additiver Fertigung.

12. Verfahren nach Anspruch 11, ferner umfassend den Schritt des Berechnens einer 3D-Lamellenblock-Geometrie, und des Umwandelns der berechneten 3D-Geometriedaten in entsprechende Steuerbefehle für den 3D-Druck bzw. die additive Fertigung.

13. Verfahren zum Herstellen eines Lamellenblocks (100, 100a), die Schritte umfassend:
- Erstellen eines Datensatzes, welcher den Lamellenblock (100, 100a) nach einem der Ansprüche 1 bis 8 abbildet;
- Speichern des Datensatzes auf einer Speichervorrichtung oder einem Server; und
- Eingeben des Datensatzes in eine Verarbeitungsvorrichtung oder einen Computer, welche/r eine Vorrichtung zur additiven Fertigung derart ansteuert, dass diese den im Datensatz abgebildeten Lamellenblock (100, 100a) fertigt.

14. Computerprogramm, umfassend Datensätze, die bei dem Einlesen der Datensätze durch eine Verarbeitungsvorrichtung oder einen Computer diese/n veranlasst, eine Vorrichtung zur additiven Fertigung derart anzusteuern, dass die Vorrichtung zur additiven Fertigung ein Lamellenblock (100, 100a) mit den Merkmalen nach einem der Ansprüche 1 bis 8 fertigt.

15. Computerlesbarer Datenträger, auf dem das Computerprogramm nach Anspruch 14 gespeichert ist.

## Claims

1. A fin block (100, 100a) for a calibrating device (500) for the calibrating of an extruded profile (550), wherein the fin block (100, 100a) comprises a fin structure (110, 110a), which has a plurality of fins (112) which are spaced apart from one another by grooves (114) and are arranged in longitudinal direction of the fin block (100, 100a), **characterized in that** the fins (112) of the fin structure (110, 110a) have a variable dimension in longitudinal direction of the fin block (100, 100a), wherein the fin structure (110, 110a) has a constant spacing in longitudinal direction of the fin block (100, 100a).

2. The fin block (100, 100a) according to Claim 1, **characterized in that** the dimension of the fins (112) varies continuously in longitudinal direction.

3. The fin block (100, 100a) according to one of the preceding claims, **characterized in that** the dimension of the fins (112) varies arbitrarily in longitudinal direction of the fin block (100, 100a).

4. The fin block (100, 100a) according to one of the preceding Claims 1 to 2, **characterized in that** the dimension of the fins (112) varies in longitudinal direction of the fin block (100, 100a) according to a predefined function.

5. The fin block (100, 100a) according to one of the preceding claims, **characterized in that** the fin block (100, 100a) has furthermore a carrier structure (120), on which the fin structure (110, 110a) is arranged.

6. The fin block (100, 100a) according to Claim 5, wherein the carrier structure (120) and the fins (112) are made from the same material or from different materials.

7. The fin block (100, 100a) according to one of the preceding claims, wherein the fin block (100, 100a) is formed in one piece.

8. The fin block (100, 100a) according to one of the preceding claims, wherein the fin block (100, 100a) is produced by means of 3D printing or respectively by means of an additive manufacturing method.

9. A calibrating device (500) for the calibrating of extruded profiles (550), comprising a plurality of fin blocks (100, 100a) according to one of Claims 1 to 8, wherein the fin blocks (100, 100a) are arranged with respect to one another for the formation of a calibration opening.

10. The calibrating device according to Claim 9, wherein the calibrating device (500) comprises a plurality of actuating devices (520), wherein each actuating device (520) is coupled respectively with a fin block (100, 100a), in order to actuate each fin block (100, 100a) individually.

11. A method for producing a fin block (100, 100a) according to one of Claims 1 to 8, comprising the step of producing the fin block (100, 100a) by means of 3D printing or respectively by means of additive manufacture.

12. The method according to Claim 11, further comprising the step of calculating a 3D fin block geometry, and of converting the calculated 3D geometry data into corresponding control commands for the 3D printing or respectively the additive manufacture.

13. A method for producing a fin block (100, 100a), comprising the steps:
- developing a data set which represents the fin block (100, 100a) according to one of Claims 1 to 8;
- storing the data set on a memory device or a server; and
- inputting the data set into a processing device or a computer, which actuates a device for additive manufacture in such a way that it manufactures the fin block (100, 100a) represented in the data set.

14. A computer program, comprising data sets, which with the reading of the data sets by a processing device or a computer causes it to actuate a device for additive manufacture in such way that the device for additive manufacture manufactures a fin block (100, 100a) with the features according to one of Claims 1 to 8.

15. A machine-readable data carrier, on which the computer program according to Claim 14 is stored.

## Revendications

1. Bloc de lamelles (100, 100a) pour un dispositif d'étalonnage (500) pour étalonner un profilé (550) extrudé, dans lequel le bloc de lamelles (100, 100a) comprend une structure de lamelles (110, 110a), laquelle présente une pluralité de lamelles (112) qui sont éloignées l'une de l'autre par des rainures (114) et sont disposées dans le sens longitudinal du bloc de lamelles (100, 100a), **caractérisé en ce que** les lamelles (112) de la structure de lamelles (110, 110a) présentent une dimension variable dans le sens longitudinal du bloc de lamelles (100, 100a), dans lequel la structure de lamelles (110, 110a) présente une division constante dans le sens longitudinal du bloc de lamelles (100, 100a).

2. Bloc de lamelles (100, 100a) selon la revendication 1, **caractérisé en ce que** les dimensions des lamelles (112) varient en continu dans le sens longitudinal.

3. Bloc de lamelles (100, 100a) selon l'une des revendications précédentes, **caractérisé en ce que** les dimensions des lamelles (112) varient au choix dans le sens longitudinal du bloc de lamelles (100, 100a) .

4. Bloc de lamelles (100, 100a) selon l'une des revendications 1 à 2, **caractérisé en ce que** les dimensions des lamelles (112) varient selon une fonction prédéfinie dans le sens longitudinal du bloc de lamelles (100, 100a).

5. Bloc de lamelles (100, 100a) selon l'une des revendications précédentes, **caractérisé en ce que** le bloc de lamelles (100, 100a) présente en outre une structure porteuse (120) sur laquelle la structure de lamelles (110, 110a) est disposée.

6. Bloc de lamelles (100, 100a) selon la revendication 5, dans lequel la structure porteuse (120) et les lamelles (112) sont fabriquées dans le même matériau ou dans des matériaux différents.

7. Bloc de lamelles (100, 100a) selon l'une des revendications précédentes, dans lequel le bloc de lamelles (100, 100a) est formé d'un seul bloc.

8. Bloc de lamelles (100, 100a) selon l'une des revendications précédentes, **caractérisé en ce que** le bloc de lamelles (100, 100a) est fabriqué par procédé d'impression 3D, respectivement, par un procédé de fabrication additive.

9. Dispositif d'étalonnage (500) pour étalonner des profilés extrudés (550), comprenant une pluralité de blocs de lamelles (100, 100a) selon l'une des revendications 1 à 8, dans lequel les blocs de lamelles (100, 100a) sont disposés les uns par rapport aux autres pour former une ouverture d'étalonnage.

10. Dispositif d'étalonnage selon la revendication 9, dans lequel le dispositif d'étalonnage (500) comprend une pluralité de dispositifs d'actionnement (520), dans lequel chaque dispositif d'actionnement (520) est couplé respectivement à un bloc de lamelles (100, 100a) pour actionner un bloc de lamelles (100, 100a) respectif individuellement.

11. Procédé de fabrication d'un bloc de lamelles (100, 100a) selon l'une des revendications 1 à 8, comprenant l'étape de fabrication du bloc de lamelles (100, 100a) par impression 3D, respectivement, par fabrication additive.

12. Procédé selon la revendication 11, comprenant en outre l'étape de calcul d'une géométrie 3D de bloc de lamelles et de conversion des données de géométrie 3D calculées en commandes correspondantes pour l'impression 3D, respectivement, la fabrication additive.

13. Procédé de fabrication d'un bloc de lamelles (100, 100a), les étapes comprenant :
- de créer un jeu de données qui représente le bloc de lamelles (100, 100a) selon l'une des revendications 1 à 8 ;
- d'enregistrer le jeu de données sur un dispositif de mémoire ou un serveur ; et
- de saisir le jeu de données dans un dispositif de traitement ou un ordinateur qui commande un dispositif de fabrication additive de façon à ce que celui-ci fabrique le bloc de lamelles (100, 100a) représenté dans le jeu de données.

14. Programme informatique comprenant des jeux de données qui, lorsque les jeux de données sont mis en mémoire par un dispositif de traitement ou un ordinateur, fait que celui-ci commande un dispositif de fabrication additive de façon à ce que le dispositif de fabrication additive fabrique un bloc de lamelles (100, 100a) ayant les caractéristiques selon l'une des revendications 1 à 8.

15. Support de données pouvant être lu sur ordinateur, sur lequel est enregistré le programme informatique selon la revendication 14.
